**Europäisches Patentamt**

**European Patent Office**

**Office européen des brevets**

(19)

(11) Veröffentlichungsnummer : **0 073 049**
**B1**

(12) ## EUROPÄISCHE PATENTSCHRIFT

(45) Veröffentlichungstag der Patentschrift :
**15.05.85**

(51) Int. Cl.⁴ : **F 16 L 5/00**, F 16 L 25/00,
F 16 L 39/00, F 16 L 47/00

(21) Anmeldenummer : **82107690.8**

(22) Anmeldetag : **23.08.82**

(54) Gebäudeeinführung für Versorgungsleitungen, insbesondere für Gas und Wasser.

(30) Priorität : **25.08.81 CH 5467/81**

(43) Veröffentlichungstag der Anmeldung :
**02.03.83 Patentblatt 83/09**

(45) Bekanntmachung des Hinweises auf die Patenterteilung : **15.05.85 Patentblatt 85/20**

(84) Benannte Vertragsstaaten :
**AT BE DE FR IT NL SE**

(56) Entgegenhaltungen :
**EP-A- 0 040 791**
**DE-A- 2 934 491**

(73) Patentinhaber : **GEORG FISCHER AKTIENGESELL-SCHAFT**
**Mühlentalstrasse 105**
**CH-8201 Schaffhausen (CH)**

(72) Erfinder : **Hurter, Fritz**
**Bocksrietstrasse 108**
**CH-8200 Schaffhausen (CH)**
Erfinder : **Kaiser, Roland**
**Buchbergstrasse 18**
**D-7712 Blumberg (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft eine Gebäudeeinführung gemäss dem Oberbegriff des Anspruches 1.

Gebäudeeinführungen dieser Art sind bereits bekannt und beispielsweise im DE-U-79 24 258 (entspricht der DE-A-2 934 491) beschrieben.

Obschon diese Ausführung auch bei Feuereinwirkung dicht bleiben soll, was insbesondere für Gasleitungen wichtig ist, ist bei sehr hohen Temperaturen keine Dichtigkeit mehr vorhanden, weil keine Dichtung aus einem feuerfesten Material vorgesehen ist.

Da das Kunststoffrohr an seinem anschlussseitigen Ende direkt am metallischen Anschlussstück des Schutzrohres anliegt, ist ebenfalls keine Feuersicherheit gegeben, denn das sich erhitzende Anschlussstück würde dabei das Kunststoffrohr zerstören.

Das Anschlussstück liegt ohne einer zusätzlichen Dichtung nur metallisch am Verschraubungskörper an, so dass bei Undichtheit der einzigen Dichtung keine zusätzliche Abdichtung z. B. gegen ausströmendes Gas vorhanden ist.

Schliesslich weist die bestehende Ausführung keine Prüföffnung auf, mit deren Hilfe z. B. Gas- oder Wasserdruck kontrolliert, ein Fehler eruiert oder Reinigungen durchgeführt werden können.

Eine weitere Gebäudeeinführung der eingangs gennanten Art ist durch eine gemäss Artikel 54 (3) EPÜ nicht vorveröffentlichte Schrift bekannt geworden (EP-A-40 791), wobei diese mit zwei Dichtungen an der Verschraubungsstelle versehen ist. Der mehrteilige Dichtungsaufbau ist relativ aufwendig und es besteht keine direkte stirnseitige Anlage zwischen dem Schutzrohr-Flansch und dem Anschlussfitting.

Aufgabe der vorliegenden Erfindung ist die Schaffung einer Gebäudeeinrichtung für Versorgungsleitungen der eingangs genannten Art, welche trotz einfachen und kostengünstigen Aufbau eine einwandfreie Dichtwirkung der Verbindungsstelle aufweist, gegen Feuer möglichst gut geschützt und mit einer Prüföffnung versehen sein.

Diese Aufgabe ist erfindungsgemäss durch die Lehre im kennzeichnenden Teil des Anspruches 1 gelöst.

Ausführungsformen dieser Lehre sind in den abhängigen Ansprüchen umschrieben.

Die geschaffende Ausführung zeichnet sich durch Einfachheit, geringe Kosten, Feuersicherheit und leichte Kontrollierbarkeit aus.

Nachfolgend werden Ausführungsbeispiele der erfindungsgemässen Gebäudeeinrichtung anhand der Zeichnung näher erläutert.

Es zeigen :

Figur 1 eine Längsansicht einer Gebäudeeinführung mit Teilschnitt, und

Figur 2 wie Fig. 1, jedoch gemäss einer zweiten Ausführungsform.

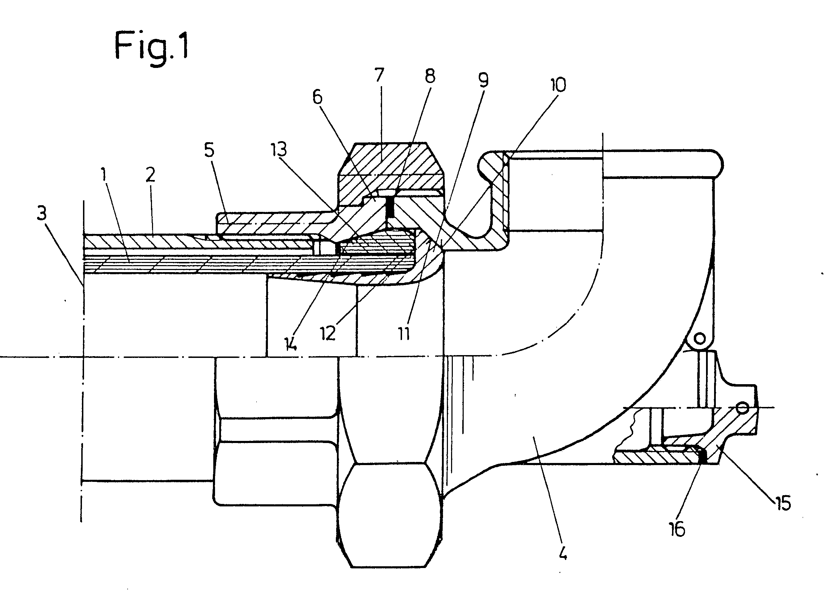

In Fig. 1 ist ein Kunststoffrohr 1 dargestellt, über das ein Schutzrohr 2 aus Metall konzentrisch angeordnet ist. Die beiden Rohre 1, 2 erstrecken sich durch die Gebäudewandung bis zur Innenseite 3 derselben, an welcher die Rohre 1, 2 mit einem Anschlussrohr, bzw. Anschlussfitting wie z. B. einem Rohrbogen 4 mediumsdicht verbunden sind. Auf der Innenseite 3 des Gebäudes ist das Schutzrohr 2 mit einem aufgeschraubten Uebergangsrohr 5 versehen, das am vom Gewinde abliegenden Ende mit einem umfangsmässig erweiterten Abschnitt 6 zur Anlage gegen eine Halterung einer Ueberwurfmutter 7 versehen ist. Diese Mutter 7 dient zum mediumsdichten Verschrauben der beiden Rohre 1, 2 mit dem Rohrbogen 4 und greift in ein Gewinde an diesem ein. Zwischen den Flanschen des Rohrbogens 4 und des Uebergangsrohres 5 befindet sich eine feuerfeste, äussere Dichtung 8, die, z. B. mindestens teilweise, aus Asbest besteht, wobei aber eine direkte Anlage zwischen dem Uebergangsrohr 5 und dem Rohrbogen 4 vorhanden ist.

In das Ende des Kunststoffrohres 1 ist ein Rohreinsatz 9 eingepresst dessen äusserer Umfang im Berührungsbereich mit der Innenwandung des Rohres 1 mit Widerhaken versehen ist. Das äussere Ende des Rohreinsatzes 9 weist eine kegelstumpfförmig sich etwa von der Aussenfläche des Rohres 1 weg erstreckende Fläche 10 auf, die zur Anlage gegen eine entsprechend ausgebildete Innenfläche 11 des Rohrbogens 4 bestimmt ist. Eine Anschlagfläche 12 des Rohreinsatzes 9 erstreckt sich in radialer Richtung und dient zur Anlage gegen das Ende des Rohres 1 sowie als Halterung für eine zweite innere Dichtung 13, die in ihrem, dem Uebergangsrohr 5 zugekehrten Abschnitt 14 kegelstumpfförmig verläuft. Im daran anliegenden Abschnitt ist das Uebergangsrohr 5 entsprechend ausgebildet.

Beim Anschrauben der Ueberwurfmutter 7 wird die innere Dichtung 13 gegen die Flanschinnenwandung des Rohrbogens 4, den Rohreinsatz 9, das Rohr 1 sowie gegen die Innenfläche des Uebergangsrohrs 5 gepresst und dichtet somit die Rohre 1 und 2 vollständig gegeneinander ab, wobei aber der Mediumfluss vom Kunststoffrohr 1 zum Rohrbogen 4 nicht beeinträchtigt wird.

Die Aufgabe der äusseren Dichtung 8 besteht somit darin, einen zusätzlichen Schutz zu bilden. Ferner ist diese Dichtung 8 extrem feuerfest ausgelegt, damit die Rohrverbindung auch bei Feuer absolut dicht bleibt.

Es ist auch vorgesehen, die innere Dichtung 13 derart auszulegen, dass sie auch bei sehr hohen Temperaturen absolut dicht bleibt.

Im äusseren Bogenabschnitt weist der Rohrbogen 4 eine mittels eines verschraubbaren Stopfens 15 geschlossene Oeffnung zur Reinigung und Kontrolle des Durchflusses auf. An Stelle des Stopfens kann auch ein Ventil mit Anschlussöffnung zur Druckmessung des Mediums vorgesehen werden. Zwischen dem Stopfen 15 und der Oeffnung ist eine feuerfeste Dichtung 16 vorhanden.

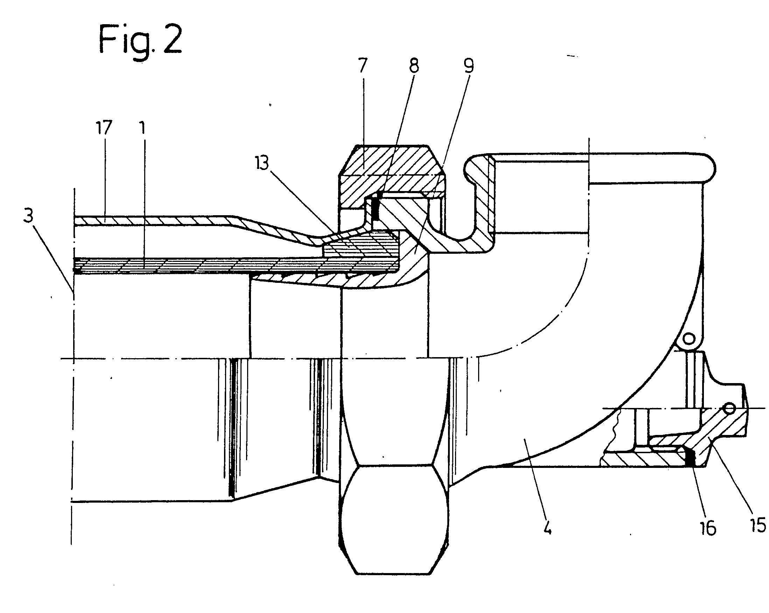

Bei der Ausführung nach Fig. 2 handelt es sich lediglich um eine Abwandlung des Schutzrohres und des Uebergangsrohres, die in Fig. 2 aus einem Rohr 17 bestehen. Im übrigen weicht Fig. 2 nicht von Fig. 1 ab.

Beim Rohr 17 handelt es sich vorzugsweise um ein Stahlrohr mit einer am Ende angeordneten Bördelung, deren Ausbildung den Dichtungen 8, 13, der Ueberwurfmutter 7 und der Muffe des Rohrbogens 4 angepasst ist, wobei der Bördelflansch direkt am Rohrbogen anliegt. Dabei ist der Abstand zwischen dem Schutzrohr 17 und dem Kunststoffrohr 1 etwas grösser als bei der Ausführung nach Fig. 1. Dieser Abstand reduziert die Gefahr einer zu starken Erwärmung des Kunststoffrohres 1, sofern Feuer ausbrechen sollte. Im übrigen ist das Schutzrohr 17 sehr leicht und preisgünstig herstellbar, was sich auf die Kosten für die Gebäudeeinführung vorteilhaft auswirkt. Die Bördelung des Stützrohres 17 zur Halterung der Ueberwurfmutter 7 kann vor dem Einmörteln des Schutzrohres 17 erstellt oder schon vorgefertigt erstellt werden.

In der Zeichnung ist ein Anschluss der beiden Rohre 1, 2 an einem Rohrbogen 4 gezeigt. Die gleiche Anschlussart ist aber auch bei Rohren und Gehäusen statt an Rohrbogen möglich.

Das Schutzrohr ist normalerweise im Mauerdurchbruch vermörtelt.

Die gezeigte Ausführung ist einfach und preisgünstig und erfordert einen geringen Arbeitsaufwand, sowohl bei der Herstellung als auch bei der Verlegung der Gebäudeeinführung in einer Mauer.

Es wird ferner darauf hingewiesen, dass bei Neuinstallationen bereits bestehende, einzementierte Rohre aus Metall als Schutzrohr verwendbar sind. Dadurch werden der Arbeitsaufwand und die Installationskosten stark reduziert.

**Patentansprüche**

1. Gebäudeeinführung für ein Rohr aus Kunststoff für Versorgungsleitungen, insbesondere für Gas und Wasser, mit einem in der Gebäudewandung befestigten Schutzrohr (2, 5 ; 17) aus Metall in dem das Kunststoffrohr (1) koaxial mit radialem Abstand angeordnet ist, mit einem Anschlussrohr bzw. Anschlussfitting (4), welcher mit dem Schutzrohr (2, 5 ; 17) stirnseitig direkt aneinanderliegend mittels einer Ueberwurfmutter (7) mediumsdicht verschraubt ist, mit einem im Ende des Kunststoffrohres (1) eingesteckten Rohreinsatz (9) mit radialem, das stirnseitige Ende des Kunststoffrohres (1) überragenden Flansch und mit einer am Aussenumfang des Kunststoffrohrendes angeordneten Dichtung (13), welche gegen die Innenfläche des Anschlussfittings (4), den Flansch des Rohreinsatzes (9), das Kunststoffrohr (1) sowie gegen eine schräge Anlagefläche am stirnseitigen Ende des Schutzrohres (2, 5 ; 17) anliegt, dadurch gekennzeichnet, dass eine feuerfeste äussere Dichtung (8) zwischen Schutzrohr (2, 5 ; 17) und Anschlussfitting (4) angeordnet ist, dass die innere Dichtung (13) hochtemperaturbeständig ist, dass der Anschlussfitting (4) eine mit einem lösbaren Verschluss (15) und einer feuerfesten Dichtung (16) versehene Prüföffnung aufweist und dass das Kunststoffrohr (1) und das Schutzrohr (2, 5 ; 17) auch im Anschlussbereich auf Abstand gehalten sind.

2. Gebäudeeinführung nach Anspruch 1, dadurch gekennzeichnet, dass das Schutzrohr (2) an seinem anschlusseitigen Ende mit einem aufgeschraubten Uebergangsrohrstück (5) versehen ist, dessen stirnseitiges Ende einen umfangsmässig erweiterten Abschnitt (6) aufweist, der gegen die Innenseite des Flansches der Ueberwurfmutter (7) anliegt (Fig. 1).

3. Gebäudeeinführung nach Anspruch 1, dadurch gekennzeichnet, dass das Schutzrohr (17) einstückig ausgebildet ist, und dass dessen stirnseitiges Ende im Anschluss an die schräge Anlagefläche eine radial nach außen gerichtete Bördelung aufweist, an welcher die Innenseite des Flansches der Ueberwurfmutter (7) anliegt (Fig. 2).

**Claims**

1. Building inlet for a plastics pipe for supply lines, in particular for gas and water, with a protective metal pipe (2, 5 ; 17) secured in the building wall in which the plastics pipe (1) is arranged coaxially with radial clearance, having a connecting pipe or connecting fitting (4) which is screwed in medium-tight fashion with the protective pipe (2, 5 ; 17) on the front directly adjacent to each other, by means of a clamping nut (7), with a pipe insert (9) pushed into the end of the plastics pipe (1), with a radial flange projecting over the front end of the plastics pipe (1), and with a seal (13) arranged at the outer circumference of the plastics pipe end, which seal abuts the inner surface of the connecting fitting (4), the flange of the pipe insert (9), the plastics pipe (1) and an inclined contact surface at the front end of the protective pipe (2, 5 ; 17), characterised in that a refractory outer seal (8) is arranged between the protective pipe (2, 5 ; 17) and the connecting fitting (4), in that the inner seal (13) is resistant to high temperatures, in that the connecting fitting (4) has an inspection aperture provided with releasable closure means (15) and with a refractory seal (16), and in that the plastics pipe (1) and the protective pipe (2, 5 ; 17) are also held spaced apart in the connection area.

2. Building inlet according to claim 1, characterised in that the protective pipe (2) is provided at its connection end with a screwed-on transition piece (5), the front end of which has a section (6) enlarged at the circumference which abuts the inside of the flange of the clamping nut (7) (Fig. 1).

3. Building inlet according to claim 1, characterised in that the protective pipe (17) is made in one piece, and in that its front end has a radially outwardly directed rim in the connection to the inclined contact surface, against which the inside of the flange of the clamping nut (7) abuts (Fig. 2).

**Revendications**

1. Entrée dans un bâtiment pour un tube en matière plastique prévu pour des canalisations d'alimentation, notamment pour le gaz et l'eau, comportant un tube de protection métallique (2, 5 ; 17) fixé à la paroi du bâtiment et dans lequel le tube en matière plastique (1) est disposé coaxialement à une certaine distance radiale, un tube ou un manchon de raccordement (4), qui est réuni par vissage, d'une manière étanche aux fluides, au tube de protection (2, 5 ; 17), en étant appliqué contre ce dernier par sa face frontale, au moyen d'un écrou d'accouplement (7), un insert tubulaire (9) enfiché dans l'extrémité du tube en matière plastique (1) et comportant une bride radiale faisant saillie sur l'extrémité frontale du tube en matière plastique (1), et une garniture d'étanchéité (13) disposée sur le pourtour extérieur de l'extrémité du tube en matière plastique qui s'applique contre la surface intérieure du manchon de raccordement (4), contre la bride de l'insert tubulaire (9), contre le tube en matière plastique (1) ainsi que contre une surface oblique d'application située au niveau de l'extrémité frontale du tube de protection (2, 5 ; 17), caractérisée en ce qu'une garniture d'étanchéité extérieure (8) résistante au feu est disposée entre le tube de protection (2, 5 ; 17) et le manchon de raccordement (4), que la garniture d'étanchéité intérieure (13) résiste à une température élevée, que le manchon de raccordement (4) comporte une ouverture de contrôle munie d'une garniture d'étanchéité (16) résistante au feu et que le tube en matière plastique (1) et le tube de protection (2, 5 ; 17) sont également maintenus à distance l'un de l'autre dans la zone de raccordement.

2. Entrée dans un bâtiment selon la revendication 1, caractérisée en ce que le tube de protection (2) est muni, sur son extrémité située du côté du raccordement, d'un élément tubulaire de jonction (5) vissé, dont l'extrémité frontale comporte une partie (6) élargie sur son pourtour et qui s'applique contre la face intérieure de la bride de l'écrou d'accouplement (7) (figure 1).

3. Entrée dans un bâtiment selon la revendication 1, caractérisée en ce que le tube de protection (17) est réalisé d'un seul tenant et que son extrémité frontale comporte, dans une position jouxtant la surface d'application oblique, un rebord radial dirigé vers l'extérieur, contre lequel s'applique la face intérieure de la bride de l'écrou d'accouplement (7) (figure 2).

Fig.1

Fig. 2